# EUROPÄISCHE PATENTSCHRIFT

(11) **EP 1 958 315 B1**
(45) Veröffentlichungstag und Bekanntmachung des Hinweises auf die Patenterteilung: **06.03.2013**
(21) Anmeldenummer: 06819500.7
(22) Anmeldetag: 15.11.2006
(51) Int. Cl.: H02K 7/102, F16D 65/14

(54) **SPERRVORRICHTUNG, GETRIEBE-ANTRIEBSEINHEIT BEINHALTEND EINE SOLCHE SPERRVORRICHTUNG, SOWIE VERFAHREN ZUR HERSTELLUNG EINER SOLCHEN GETRIEBE-ANTRIEBSEINHEIT**
BLOCKING APPARATUS, GEARBOX DRIVE UNIT CONTAINING A BLOCKING APPARATUS SUCH AS THIS, AS WELL AS A METHOD FOR PRODUCTION OF A GEARBOX DRIVE UNIT SUCH AS THIS
DISPOSITIF DE BLOCAGE, UNITÉ D ENTRAÎNEMENT À ENGRENAGE COMPRENANT UN TEL DISPOSITIF DE BLOCAGE ET PROCÉDÉ POUR FABRIQUER UNE TELLE UNITÉ D ENTRAÎNEMENT À ENGRENAGE

(30) Priorität: 29.11.2005 DE 102005057239; 18.04.2006 DE 102006018096
(43) Veröffentlichungstag der Anmeldung: 20.08.2008
(73) Patentinhaber: ROBERT BOSCH GMBH, 70442 Stuttgart (DE)
(72) Erfinder: VELTE, Uwe, 77833 Ottersweier (DE); BECKER, Ewald, 77815 Buehl (DE); RETTMAR, Ulrich, 77830 Buehlertal (DE); KLOBES, Peter, 76467 Bietigheim (DE)
(86) Internationale Anmeldenummer: PCT/EP2006/068489
(87) Internationale Veröffentlichungsnummer: WO 2007/062982

(56) Entgegenhaltungen:
- EP-A1- 1 011 188
- DE-A1- 1 940 587
- DE-A1- 19 719 990
- FR-A- 2 588 702
- JP-A- 61 233 232
- JP-U- 4 098 858
- US-A- 4 445 596

## Beschreibung

### Stand der Technik

Die Erfindung betrifft eine Sperrvorrichtung mit zwei verschiebbar zueinander angeordneten Sperrelementen, sowie eine Getriebe-Antriebseinheit beinhaltend eine solche Sperrvorrichtung und ein Verfahren zum Herstellen einer solchen Getriebe-Antriebseinheit nach der Gattung der unabhängigen Ansprüche.

Mit der EP 1 320 175 A2 ist eine Antriebs- und/oder Abbremsvorrichtung bekannt geworden, bei der eine Bremseinheit innerhalb eines Gehäuses angeordnet ist, das einen Elektromotor umschließt. Die Bremseinheit weist eine Bremsscheibe und einen Bremskörper auf, die elektromagnetisch reibschlüssig gegeneinander anpressbar sind. Dabei ist der Bremskörper drehfest und axial fixiert mit dem Gehäuse des Elektromotors verbunden, während die Bremsscheibe axial verschiebbar auf der drehbar gelagerten Ankerwelle des Elektromotors angeordnet ist.

Eine derart ausgestaltete Bremsvorrichtung hat den Nachteil, dass bei der Montage der Antriebseinheit viele Toleranzen ausgeglichen werden müssen, da beim Zusammenbau der Bremskörper direkt am Gehäuse und die Bremsscheibe auf der Ankerwelle vormontiert werden, und erst anschließend zusammengebaut und zueinander justiert werden. Außerdem ist der Reibschluss zwischen den beiden Bremsscheiben sehr anfällig gegenüber Verschleiß und äußeren Einflüssen wie Schmutz, Kohlestaub, Fett und Erschütterungen, weshalb in der EP 1 320 175 A1 das Gehäuse des Elektromotors auch wasser-, luft- und staubdicht abgeschlossen sein muss. Des Weiteren besteht die Gefahr, dass die beiden Bremselemente gegeneinander verkannten, wodurch das Sperrmoment nicht zuverlässige übertragen wird, und relativ laute Geräusche werden können.

**Mit der** FR 2588702 **ist ein Elektromotor mit einer Sperrrichtung bekannt geworden, bei der ein Sperrelement mittels Führungsstiften, die beispielsweise als Schrauben ausgebildet sind, axial entlang der Rotorwelle geführt wird.**

**Die** DE 19719990 **zeigt eine Bremse für einen Elektromotor, bei dem die Bremsscheibe axiale Durchbrüche aufweist, in die zu deren Führung axiale Führungsstifte eingreifen.**

### Offenbarung der Erfindung

### Vorteile der Erfindung

Die erfindungsgemäße Getriebe-Antriebseinheit, und die darin angeordnete Sperrvorrichtung, sowie das Verfahren zur Herstellung einer solchen Getriebe-Antriebseinheit haben den Vorteil, dass durch die Ausbildung der Sperrvorrichtung als eigenständiges, komplett montierbares Modul der Montageaufwand für eine solche Getriebe-Antriebseinheit deutlich reduziert wird. Dabei ist keine hohe Montagegenauigkeit des Mitnehmers auf der Welle gegenüber der Sperrvorrichtung und keine hohe Positionsgenauigkeit der Sperrvorrichtung im Gehäuse der Getriebe-Antriebseinheit erforderlich. Die axialen Toleranzen (Luftspalt) zwischen den Sperrelementen können bei der separaten Herstellung und unabhängigen Funktionsprüfung der Sperrvorrichtung mit deutlich weniger Aufwand eingehalten werden. Durch die Ausbildung eines axialen Formschlusses zwischen den beiden Sperrelementen ist die Sperrvorrichtung viel unempfindlicher gegenüber Schmutz und Fett oder Feuchtigkeit oder Kohlestaub. Durch den minimalen Verschleiß, bzw. Abrieb der Sperrelemente erhöht sich die Lebensdauer und die Dauerbelastbarkeit der Sperrvorrichtung. Aufgrund der Ausbildung des axialen Formschlusses zwischen den beiden Sperrelementen, beispielsweise in Form einer axialen Verzahnung (radial angeordnete Rillen mit darin eingreifenden Zähnen), eignet sich die Sperrvorrichtung auch für den Einsatz im Kraftfahrzeug, bei dem erhöhte Schwingungs- und Schüttelbelastungen auftreten. Im Gegensatz zu der Anordnung von Bremsscheiben, ist die Erfindung unempfindlich gegenüber einer Resonanzfrequenz des Feder-Masse-Systems, die durch die Schwingungen im Fahrzeug angeregt wird. Durch die Ausbildung eines axialen Fortsatzes am Innenpol, der in entsprechende Öffnungen im axial beweglichen Sperrelement greift, wird verhindert, dass die beiden Sperrelemente gegeneinander verkannten. Somit kann durch diese kompakte Zentrierung ein zuverlässiger Formschluss im Sperrzustand über die gesamte Lebensdauer der Sperrvorrichtung erzielt werden. **Um das Sperrmoment im gesperrten Zustand vom zweiten Sperrelement auf den drehfesten Elektromagneten abzuführen, sind an letzterem axiale Führungsbolzen angeordnet, die in korrespondierende axiale Öffnungen im zweiten Sperrelement greifen. Damit der axiale Formschluss zwischen den Sperrelementen leichter und zuverlässiger hergestellt werden kann, sind die Führungsbolzen konisch ausgebildet. Dadurch herrscht bei der Verzahnungsfindung ein größeres Spiel, wodurch die Verzahnung tiefer ineinander eingreifen - und damit höhere Drehmomente übertragen kann.**

Durch die in den Unteransprüchen aufgeführten Merkmale sind vorteilhafte Weiterbildungen der Vorrichtung und des Verfahren nach dem unabhängigen

Ansprüchen möglich. Ist die Öffnung in der zweiten Sperrscheibe als Durchgangsöffnung ausgebildet, kann die axiale Führung über die gesamte Dicke und über den gesamten axialen Verstellweg des zweiten Sperrelements realisiert.

Besonders vorteilhaft wird der axiale Fortsatz als zentral angeordnete Hülse ausgebildet, der das Sperrelement radial über den gesamten Umfang gleichmäßig abstützt, wodurch ein definiertes Grundspiel einstellbar ist. Dadurch ist der axiale Formschluss zwischen den beiden Sperrelementen exakt konzentrisch zueinander ausgerichtet, wodurch ein höheres Sperrmoment aufgenommen werden kann.

Wird der Fortsatz aus einem näherungsweise magnetisch nicht leitenden Material, z.B. Edelstahl, hergestellt, wird verhindert, dass das zweite Sperrelement radial mittels Magnetkraft verschoben wird. Dadurch kann unterbunden werden, dass das Sperrelement am Sperrengehäuse anliegt, wodurch ein sauberes axiales Ineinandergreifen der beiden Sperrelemente dauerhaft gewährleistet ist.

Da der Innenpol aus magnetisch gut leitfähigem Material gefertigt ist, kann der axiale Fortsatz sehr günstig als separat hergestellte Hülse aus einem anderen Werkstoff gefertigt werden, und anschließend in eine entsprechende Aufnahme des Innenpols eingefügt erden.

Für höhere Dauerbelastungen der axialen Führung des Sperrelements wird der axiale Fortsatz mit einer Beschichtung ausgerüstet, die besonders gleitfähig und verschleißfest ist. Bevorzugt wird hierfür Nickel oder ein Gleitlack verwendet.

Sehr kostengünstig können die Führungsbolzen einstückig mit dem Spulenträger als Kunststoff-Spritzgussteil hergestellt werden. Damit kann besonders einfach das zweite Sperrelement axial geführt werden.

In einer alternativen Ausführung weist der radiale Fortsatz radiale Ausformungen auf, die in entsprechende Gegenaussparungen im Innenpol und/oder im zweiten Sperrelement greifen. Damit kann das Sperrmoment direkt vom zweiten Sperrelement über den Innenpol auf das Getriebegehäuse übertragen werden.

Besonders zweckmäßig kann direkt am Innenpol eine Lageraufnahme ausgeformt werden, in die die Antriebswelle mit einem entsprechenden Radiallager eingesetzt werden kann.

Wird ein Dämpfungselement als ein die Welle umschließenden Ring ausgebildet, wird das zweite Sperrelement über den gesamten Umfang gleichmäßig beim Anschlag gegen den Elektromagneten gedämpft. Der Ring kann vorteilhaft einteilig ausgebildet werden und aufgrund seiner Ausdehnung über den gesamten Umfang einfach befestigt werden.
Durch die Anordnung eines Dämpfungselements zwischen dem Elektromagneten und dem zweiten Sperrelement kann die Körperschallanregung beim Lösen der Sperre wirkungsvoll unterbunden werden. Zur effektiven Unterdrückung des Körperschalls wird das Dämpfungselement am günstigsten aus einem Kunststoff, vorzugsweise aus einem Elastomer ausgebildet, das den Körperschall über einen großen Temperaturbereich wirkungsvoll absorbieren kann. Beispielsweise weist der Elektromagnet einen Innenpol auf, auf dem ein Spulenkörper gelagert ist und die beide zusammen eine axiale Stirnfläche bilden, an der das Dämpfungselement fest fixiert werden kann.

In einer bevorzugten Ausführung wird das ringförmige Dämpfungselement mittels einer Ringfeder gegen die Stirnseite des Elektromagneten oder des zweiten Sperrelements gepresst. Von Vorteil ist es dabei, wenn hierfür die ohnehin vorhandene Rückstellfeder für das zweite Sperrelement gleichzeitig für die Fixierung des Dämpfungselements verwendbar ist. Wird als Ringfeder eine konische Spiralfeder verwendet, ist dadurch eine saubere axiale Führung des zweiten Sperrelements gewährleistet, ohne dass hierfür zusätzlicher Bauraum in axialer Richtung benötigt wird. Die Spiralfeder kann besonders günstig an einem axialen Versatz zwischen dem Innenpol und dem Spulenkörper anliegen, wodurch die Spiralfeder radial fixiert ist. Bildet der Innenpol mit dem Spulenkörper einen solchen axialen Versatz, so kann das Dämpfungselement vorteilhaft als hutförmige Kappe über dem Innenpol und dem Spulenkörper angeordnet werden, sodass die hutförmige Kappe am axialen Versatz radial anliegt. Bevorzugt wird ein solches Dämpfungselement aus Teflon hergestellt und weist optional als Anschlagsfläche eine axiale Profilierung auf, die den Anschlag des zweiten Sperrelements akustisch dämpft.

Vorteilhaft ist es, die Sperrvorrichtung derart zu betreiben, dass während des Betriebszustands der mindestens eine Elektromagnet aktiviert wird, so dass dieser das zweite Sperrelement axial vom ersten Sperrelement entgegen einer Rückstellkraft weg zieht. Dadurch kann sich die Antriebswelle im bestromten Zustand des Elektromagneten ungestört drehen. Im deaktivierten Zustand des Elektromagneten (unbestromt) wird dann das zweite Sperrelement aufgrund der Anpresskraft durch das Rückstellelement gegen das erste Sperrelement gepresst, um die Drehbewegung im Sperrzustand zu blockieren. Wird das zweite Sperrelement im Drehzustand von dem Elektromagneten angezogen, liegt das Sperrelement am Dämpfungselement an, das sich wiederum am Elektromagneten abstützt. Dadurch wird eine Resonanzbildung der akustischen Schwingungen vermieden.

Das erfindungsgemäße Verfahren zur Herstellung einer erfindungsgemäßen Getriebe-Antriebseinheit hat den Vorteil, dass aufgrund der separaten Ausbildung der Sperrvorrichtung diese mit den beiden Sperrelementen ohne hohe Toleranzanforderungen einfach in das Gehäuse und auf die Antriebswelle montiert werden kann. Dazu wird die Antriebswelle in einem Mitnehmer eingeführt, der einen Formschluss mit dem ersten Sperrelement zur Drehmomentübertragung hergestellt. Die Montage der Sperrvorrichtung in das Gehäuse der Antriebseinheit erfolgt besonders günstig durch Einpressen und anschließender Axialsicherung mittels Materialumformung. Die axiale Positionierung der Sperrvorrichtung ist dabei unkritisch, da der Abstand der beiden Sperrelemente durch die Anschläge des Sperrengehäuse, bzw. der Antriebswelle justiert werden. Zur Herstellung der separat montierbaren Sperrvorrichtung ist es besonders günstig, die beiden Sperrelemente mit dem Elektromagnet und dem Rückstellelement und das Dämpfungselement innerhalb eines Sperrengehäuses zu montieren, das dann wiederum einfach in das Gehäuse der Getriebe-Antriebseinheit montiert werden kann. Das Sperrengehäuse nimmt dabei die auf die Sperrvorrichtung einwirkenden Kräfte auf und leitete sie an den Gehäusen der Getriebe-Antriebseinheit ab. Gleichzcitig schützt das Sperrengehäuse, wenn es bspw. näherungsweise geschlossen ausgebildet ist, die Sperrelemente vor Schmutz. Durch die komplette Vormontage der Sperrvorrichtung mit den beidem Sperrelementen, den Elektromagneten, dem mindestens einen Rückstellelement und dem Dämpfungselement kann diese als separate ßaueinheit ausgchldete Sperrvorrichtung von einem Lieferanten unabhängig gefertigt und auf deren Funktion und Leistungsaufhahme überprüft werden. Dadurch wird die Montage und die Funktionsprüfung der Getriebe-Antricbscinheit wesentlich vereinfacht.

### zeichnungen

In den Zeichnungen sind verscbiedene Beispiele einer Sperrvorrichtung und ein Ausfuhrungsbeispiel ein erfindungsgemäßen Sperrvorrichtung, sowie einer Getriebe-Antriebseinheit dargestellt und in der nachfolgenden Beschreibung näher erläutert. Fs zeigen
- Figur 1: einen Schnitt durch eine in eine Getriebe-Antriebseinheit eingebaute Spenvorrichtung,
- Figur 2: einen Schnitt durch ein weiteres ßeispiel einer Sperrvorrichtung,
- Figur 3: eine weitere Variation einer Sperrvorrichtung gemäß Figur 2,
- Figur 4: einen Schnitt einer erfindungsgemäße Sperrvorrichtung, und
- Figur 5: eine Explosionsdarstellung der Sperrvorrichtung aus Figur 4

### Beschreibung der Ausführungsbeispiele

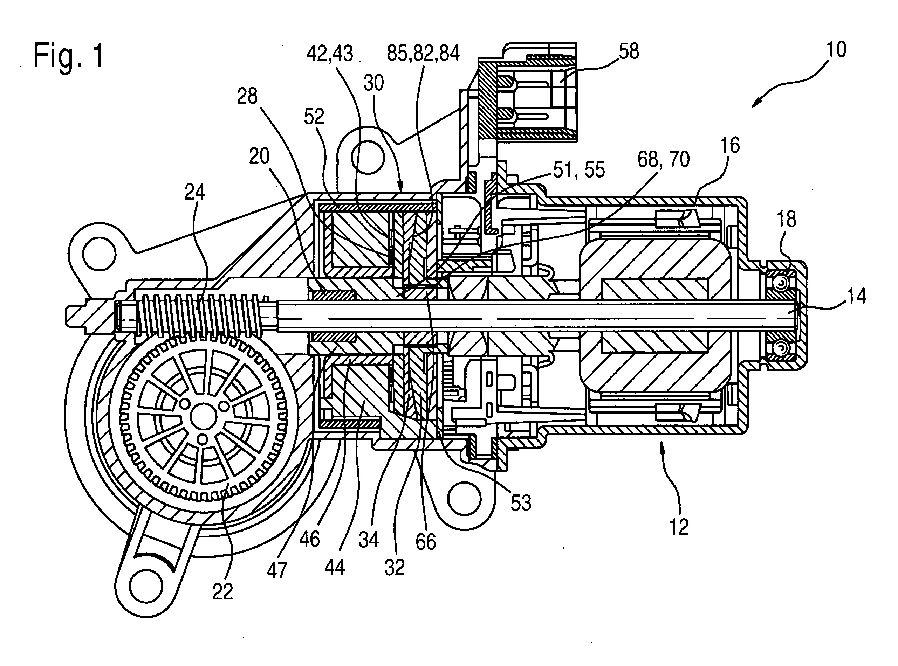

In Figur 1 ist eine Getriebe-Antriebseinheit 10 dargestellt, bei der ein Elektromotor 12 mit einer Antriebswelle 14 innerhalb eines Gehäuses 16 der Getriebe-Antriebseinheit 10 angeordnet ist. Die Antriebswelle 14 ist miltels eines Wälzlagers 18 und/oder eines Gleitlagers 20 gelagert und weist eine Schnecke 24 auf, die bspw. über ein Schneckenrad 22 mit einem nicht dargestellten Stellglied eines beweglichen Teils im Kraftfhrzeug zusammenwirkt, Um die Antriebswelle 14 gegenüber dem Gehäuse 16 zu blockieren, ist im Gehäuse 16 eine Sperrvorrichtung 30 angeordnet, die ein erstes Sperrelement 32 und ein zweites Sperrelement 34 aufweist. Das erste Sperrelement 32 greift radial formschlüssig in einen Mitnehmer 66, der drehfest auf der Ankerwelle 14 angeordnet ist. Das zweite Sperrelement 34 hingegen ist drehfest mit dem Gehäuse 16 der Getriebe. Antriebseinheit 10 verbunden. Im Sperrzustand (wie in Fig. 1 darstellt) greift das erste Sperrelement 32 axial formschlüssig in das zweite Sperrelement 34, wodurch eine Drehung der Antriebswelle 14 verhindert wird. Hierzu weisen die beiden Sperrelemente 32, 34 radial verlaufende Rillen 82 und Erhöhungen 84 auf, die einen axialen Formschluss 85 bilden und entsprechend einer axialen Verzahnung 85 mittels mindestens einem federnden Rückstellelement 42 ineinander gepresst werden. Im Ausführungsbeispiel sind die formschlüssig ineinander greifenden Flächen der Sperrelemente 32, 34 unter einem Winkel von kleiner, bzw. größer als 90° gegenüber der Welle 14 angeordnet. Das zweite Sperrelement 34 ist mit einem Elektromagneten 44 wirkverbunden, der in bestromten Zustand das zweite Sperrelement 34 entgegen der Federkraft des Rückstellelements 42 axial vom ersten Sperrelement 32 wegzieht, derart, dass sich der axiale Formschluss 85 löst, und sich die beiden Sperrelemente 32 und 34 berührungslos gegeneinander verdrehen lassen. Der Elektromagnet 44 weist einen Spulenträger 46 auf, der gleichzeitig ein Teil des Sperrengehäuses 52 bildet. Der Spulenträger 46 ist einerseits drehfest mit dem Gehäuse 16 verbunden und weist andererseits axiale Führungselemente 78 aufweist, die mit entsprechenden axialen Gegenführungen 80 des zweiten Sperrelements 34 zusammenwirken.
Dadurch ist gewährleistet, dass beim Anlegen eines Stroms an den Elektromagneten 44 sich die Sperrvorrichtung 30 im Drehzustand befindet, wohingegen der stromlose Zustand dem Sperrzustand entspricht. Dabei bildet die Sperrvorrichtung 30 eine separate vormontierte Baueinheit 31, die zumindest die beiden Sperrelemente 32, 34 und den Elektromagneten 44 umfasst. In Figur 1 sind diese in dem Sperrengehäuse 52 der Sperrvorrichtung 30 angeordnet, wobei das Sperrengehäuse 52 axial in das Gehäuse 16 eingefügt und beispielsweise mittels einer Spannscheibe 53 gegen ein Verschieben gesichert ist. Zwischen dem zweiten Sperrelement 34 und dem Elektromagneten 44 ist mindestens ein Dämpfungselement 28 angeordnet, das beim Anschlagen des zweiten Sperrelements 34 gegen den Elektromagneten 44 eine störende Geräuschbildung unterbindet. Das erste Sperrelement 32 ist als Scheibe mit einer zentralen Öffnung 63 ausgebildet, die formschlüssig in einen Mitnehmer 66 eingreift. Die formschlüssige Verbindung wird im Beispiel durch eine Innenverzahnung 68 des ersten Sperrelements 32 gebildet, die axial auf eine Außenverzahnung 70 des Mitnehmers 66 aufgeschoben wird. Bei der Montage der Getriebe-Antriebseinheit 10 wird hierbei der Mitnehmer 66 zuerst drehfest auf der Antriebswelle 14 befestigt, und anschließend die Antriebswelle 14 mit dem Mitnehmer 66 axial durch die Sperrvorrichtung 30 in die Öffnung 63 eingeschoben. Innerhalb des Spulenträgers 46 ist ein Innenpol 47 des Elektromagneten 44 angeordnet, der ein zentrales Loch 2 für die Aufnahme der Welle 14 aufweist. Der Innenpol 47 weist hierfür eine Lageraufnahme 3 auf, in der das Gleitlager 20 angeordnet ist. Der Innenpol 47 bildet einen magnetischen Rückschluss für den Elektromagneten 44 und weist an einem axialen axialen Ende eine axialen Fortsatz 51 auf, der als Hülse 55 ausgebildet ist und in eine als Durchbruch ausgebildete zentrale Öffnung 64 des zweiten Sperrelements 34 eingreift. Dabei bildet eine äußere Umfangsfläche 57 der Hülse 55 eine Führungsfläche für die axiale Verschiebung des zweiten Sperrelements 34, wodurch dieses exakt gegenüber dem ersten Sperrelement 32 zentriert wird.

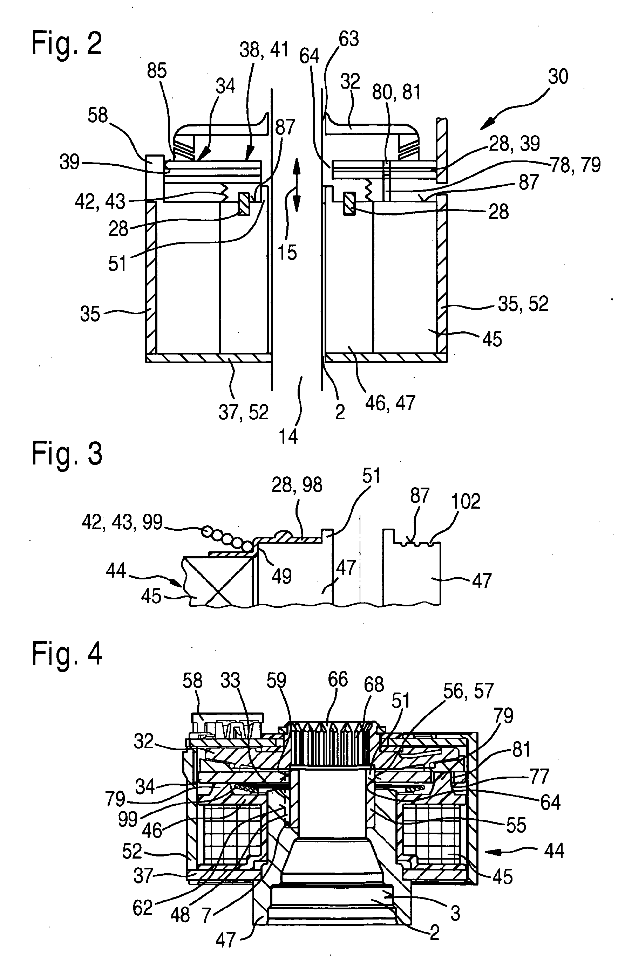

In Figur 2 ist ein weiteres Beispiel einer Sperrvorrichtung 30 dargestellt. Der Spulenträger 46 des Elektromagneten 44 ist als Innenpol 47 ausgebildet, auf dem die elektrische Wicklung 45 angeordnet ist. Das Sperrengehäuse 52 weist eine Zylinderwand 35 auf, die beispielsweise mit einer separat gebildeten Bodenfläche 37 des Sperrengehäuses 52 verbunden, insbesondere verprägt, ist. Der Innenpol 47 bildet zusammen mit der Bodenfläche 37 und der Zylinderwand 35 einen magnetischen Rückschluss des Elektromagneten 44 für das zweite Sperrelement 34, das als Ankerblech 41 ausgebildet ist. Das zweite Sperrelement 34 ist in diesem Beispiel aus einem körperschalldämpfenden Verbundblech 38 gebildet. Der axiale Formschluss/Verzahnung 85 wird dabei an das Verbundblech 38 angeformt, beispielsweise direkt aus Kunststoff angespritzt. In Figur 2 ist ein Zustand dargestellt, bei dem sich das Sperrelement 34 bei bestromten Elektromagneten 44 gerade aus dem Formschluss 82, 84 gelöst hat, aber noch nicht am Dämpfungsring 28 des Innenpols 47 anliegt. Das zweite Sperrelement 34 wird durch die axiale Führungen 78 geführt, die als Führungsbolzen 79 am Elektromagneten 44 angeformt sind und in entsprechende als Gegenführungselemente 80 ausgeformte axialen Löcher 81 im zweiten Sperrelement 34 eingreifen, wobei beispielsweise drei Löcher 81 ausgebildet sind. Für die Rückstellung des zweiten Sperrelements 34 zur Sperrung des Getriebes sorgt das Rückstellelement 42, das als ringförmiges Federelement 43 ausgebildet ist, das die Antriebswelle 14 umschließt. Im Sperrzustand wird das als Scheibe ausgebildete zweite Sperrelement 34 durch das Rückstellelement 42 formschlüssig gegen das erste Sperrelement 32 gedrückt. Wird der Elektromagnet 44 bestromt, wird das Sperrelement 34 durch die magnetische Kraft nach unten gezogen (in Figur 2), wodurch sich der Formschluss 85 des Sperrzustands löst und sich das erste Sperrelement 32 reibungslos gegenüber dem zweiten Sperrelement 34 drehen lässt.

In Figur 3 ist ein weiteres Beispiel eines Dämpfungselements 28 dargestellt, das als hutförmige Kappe 98 ausgebildet ist, die am Elektromagneten 44 anliegt. Der Innenpol 47 bildet hierbei mit der elektrischen Wicklung 45 einen axialen Versatz 49, an dem sich die hutförmige Kappe 98 radial abstützt. Der Innenpol 47 weist zur Antriebswelle 14 hin einen axialen Fortsatz 51 auf, bis zu dem hin sich die hutförmige Kappe 98 radial erstreckt. Der Fortsatz 51 dient auch zur axialen Führung und Zentrierung des zweiten Sperrelements 34. Die Kappe 98 wird mittels eines ringförmigen Federelements 43 axial gegen den Elektromagneten 44 gepresst, wobei das Federelement 43 gleichzeitig als Rückstellelement 42 des zweiten Sperrelements 34 ausgebildet ist. Das Federelement 43 ist als konische Spiralfeder 99 ausgebildet, die insbesondere im Bereich des axialen Versatzes 49 an der Kappe 98 anliegt. Zur Besseren Anlage des hutförmigen Dämpfungselements 98 ist an der axialen Seite 87 des Elektromagneten 44 eine Strukturierung 102 (insbesondere Rillen oder Bombardierung) angeformt, die die Wirkung des Dämpfungselements 28 erhöhen soll.

Figur 4 zeigt eine Sperrvorrichtung 30, bei der der Spulenträger 46, auf den die elektrische Spule 45 aufgewickelt ist, auf einem ringförmigen Innenpol 47 angeordnet ist. Dabei bildet das Sperrengehäuse 52 mit der Bodenfläche 37 und dem Innenpol 47 einen Rückschlussring des Elektromagneten 44 für das als Ankerscheibe 41 ausgebildete zweite Sperrelement 34. Der Innenpol 47 weist eine Lageraufnahme 3 auf, beispielsweise für ein Kalottenlager 20 der Welle 14. Der Innenpol 47 ist aus magnetisch gut leitfähigem Material gefertigt, beispielsweise mit einem hohen Weicheisenanteil. An der dem zweiten Sperrelement 34 zugewandten axialen Seite 87 weist der Innenpol 47 einen axialen Fortsatz 51 auf, der als Hülse 55 ausgebildet ist, in die die Welle 14 einfügbar ist. Die Hülse 55 ist als separates Bauteil aus einem Material gefertigt, das keine oder nur eine unwesentliche magnetische Leitfähigkeit aufweist. Die Hülse 55 ist z. B. aus einem entsprechenden unmagnetisierbaren Edelstahl hergestellt und weist optional eine Beschichtung 59 auf. Als Beschichtung 59 kann ein Gleitlack oder ein Nickelbelag verwendet werden. Der axiale Fortsatz 51 greift in die zentrale Öffnung 64 des zweiten Sperrelements 34 ein, um dieses zu zentrieren. Die axiale Öffnung 64 ist als Durchbruch ausgebildet, der über die gesamte Dicke 4 des zweiten Sperrelements 34 vom axialen Fortsatz 51 durchdrungen wird, unabhängig davon, ob die Sperre geöffnet oder geschlossen ist. Dabei bildet die äußere Umfangsfläche 57 der Hülse 55 eine axiale Führungsfläche 56 für die Axialbewegung des zweiten Sperrelements 34. Zur Optimierung der Gleit- und Verschleißeigenschaften wird vorzugsweise zumindest an dieser axiale Führungsfläche 56 die Beschichtung 59 aufgetragen. Das zweite Sperrelement 34 kann sich dann über eine lange Lebensdauer und bei großen Temperaturschwankungen mit einem definierten Grundspiel radial an der Hülse 55 abstützen. Die Hülse 55 ist im Ausführungsbeispiel an der Umfangsfläche 57 kreisrund ausgebildet und in eine korrespondierende Aufnahme 7 des Innenpols 47 eingepresst. Zur Übertragung des Sperrmoments in geschlossenem Zustand der Sperre sind an der axialen Seite 87 des Elektromagneten 44 die Führungsbolzen 79 angeordnet, die in entsprechende Löcher 81 im zweiten Sperrelement 34 eingreifen. Diese Führungsbolzen 79 sind in Figur 4 konisch ausgebildet, so dass beim Schließen der Sperre die Verzahnungsfindung der beiden Sperrelemente 32, 34 erleichtert wird. Der Konuswinkel 77 zur Axialrichtung 15 hin wird dabei durch den Verzahnungswinkel des axialen Formschlusses 85 und der magnetischen Anzugskraft bestimmt. Die Führungsbolzen 79 sind aus Kunststoff einstückig mit dem Spulenträger 46 ausgeformt und verjüngen sich in axialer Richtung 15 zum zweiten Sperrelement 34 hin. Beispielsweise sind drei Führungsbolzen 79 angespritzt, die rotationssymmetrisch auf dem Elektromagneten 44 angeordnet sind. Der Elektromagnet 44 ist wiederum drehfest im Gehäuse 16 der Getriebe-Antriebseinheit 10 befestigt, so dass das Sperrmoment auf das Gehäuse 16 abgeleitet wird, das wiederum z. B. mit der Karosserie verbunden ist.

In einer Variation weist die Hülse 55 an ihrer Umfangsfläche 57 radiale Ausformungen 62 auf, die einen Formschluss mit einem Innenprofil 48 des Innenpols 47 bilden, um die Hülse 55 drehfest mit dem Innenpol 47 zu verbinden. Gleichzeitig greifen die radialen Ausformungen 62 in entsprechende radiale Aussparungen 33 des zweiten Sperrelements 34, so dass das Sperrmoment über die Hülse 55 von dem zweiten Sperrelement 34 über den Innenpol 47 und das Sperrengehäuse 52 auf das Getriebegehäuse 16 übertragen wird.

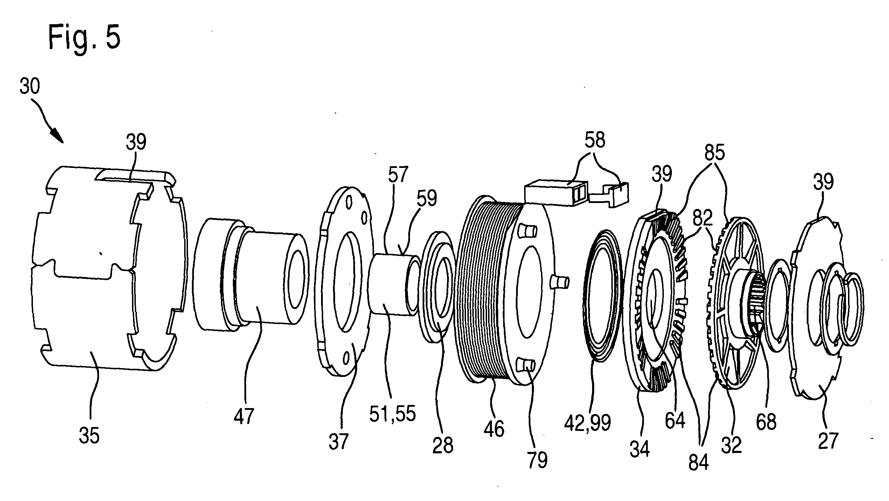

Figur 5 zeigt die separat vormontierbare Baueinheit 31 der Sperrvorrichtung 30 aus Figur 4 in Explosionsdarstellung. Alle Bauteile werden in axialer Richtung 15 montiert. Die Zylinderwand 35 bildet zusammen mit der Bodenfläche 37, dem Innenpol 47 und einem Deckel 27 das Sperrengehäuse 52, in das der Spulenträger 46 mit der elektrischen Wicklung 45 drehfest eingesetzt wird. Die Hülse 55 mit der Beschichtung 59 wird als axialer Fortsatz 51 axial in den Innenpol 47 eingefügt. An der axialen Seite 87 des Elektromagneten 44 wird am Innenpol 47 und dem Spulenträger 46 das Dämpfungselement 28 angeordnet, das sich radial bis zur Hülse 55 erstreckt. Am Dämpfungselement 28 liegt die ringförmige Rückstellfeder 42 an dem axial beweglichen zweiten Sperrelement 34 an, in das sowohl die Hülse 55 als auch die konischen Führungsbolzen 79 axial eingreifen. Das zweite Sperrelement 34 bildet mit dem ersten Sperrelement 32 als axialen Formschluss 85 eine Planverzahnung 85, über die das Sperrmoment übertragen wird. Das erste Sperrelement 32 ist drehbar im Deckel 27 gelagert, wobei die Welle 14 mit ihrem Mitnehmer 66 in die Innenverzahnung 68 des ersten Sperrelements 32 eingreifen kann. Zur elektrischen Versorgung des Elektromagneten 44 ist am Spulenträger 46 ein Steckerelement 58 angeordnet, für den am Sperrengehäuse 52 und am zweiten Sperrelement 34 entsprechende Aussparungen 39 ausgeformt sind.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann bspw. die konkrete Ausgestaltung des Formschlusses 85 zwischen des ersten und zweiten Sperrelements 32, 34, sowie des Dämpfungselements 28 und des Federelements 43 variiert, und den Anforderungen, insbesondere bzgl. Schwingungs-, Rüttel- und Geräuschbelastung, angepasst werden. Bevorzugt wird die erfindungsgemäße Getriebe-Antriebseinheit 10 zur Betätigung eines Differentialgetriebes eines Fahrzeugs verwendet, das bspw. einer Rüttelbelastung von 20 g ausgesetzt ist. Die erfindungsgemäße Sperrvorrichtung 30 kann jedoch auch für andere Elektromotoren 12, wie z.B. Stellantriebe, eingesetzt werden, die einer hohen Temperatur- und Schwingungsbelastung ausgesetzt sind.

## Patentansprüche

1. Sperrvorrichtung (30) zum Sperren einer Drehbewegung einer Welle (14) gegenüber einem Gehäuse (16) einer Getriebe-Antriebseinheit (10), mit einem ersten Sperrelement (32) und einem zweiten Sperrelement (34), das mittels eines Elektromagneten (44) und mindestens einem Rückstellelement (42) axial verschiebbar gegenüber dem ersten Sperrelement (32) ist, um eine drehfeste Verbindung zwischen dem ersten und dem zweiten Sperrelement (32, 34) zu erzeugen, wobei die Sperrelemente (32, 34) im Sperrzustand In Axlalrlchtung (15) mittels eines axialen Formschlusses (85) ineinander greifen, und der Elektromagnet (44) einen Innenpol (47) aufweist, der von einer elektrischen Spule (45) umschlossen ist, und das zweite Sperrelement (34) axiale Löcher (81) aufweist, in die zur axialen Führung des zweiten Sperrelements (34) axiale Führungsstifte (79) eingreifen, die an der axialen Seite (87) des Elektromagneten (44) angeformt sind,
**dadurch gekennzeichnet, dass** der Innenpol (47) einen weiteren axialen Fortsatz (51) aufweist, der zur axialen Führung und Zentrierung in eine entsprechende Öffnung (64) des zweiten Sperrelements (34) greift, und die Führungsstifte (79) konisch ausgebildet sind, wobei der Konuswinkel (77) derart bestimmt ist, dass genügend Spiel für eine Verzahnungsfindung des axialen Formschlusses (85) der beiden Sperrelemente (32, 34) beim Schließvorgang der Sperrvorrichtung vorhanden ist

2. Sperrvorrichtung (30) nach Anspruch **1, dadurch gekennzeichnet dass** das zweite Sperrelement (34) als Scheibe ausgebildet ist, die als Öffnung (64) einen zentralen Durchbruch (64) mit einer Dicke (4) aufweist.

3. Sperrvorrichtung (30) nach einem der Ansprüche 1 oder 2, **dadurch gekennzeichnet, dass** der axiale Fortsatz (51) als Hülse (55) ausgebildet ist, die eine einfügbare Antriebswelle (14) umschließt, wobei sich das zweite Sperrelement (34) radial an der Hülse (55) abstützt.

4. Sperrvorrichtung (30) nach einem der vorhergehenden Ansprüche, **dadurch gekennzeichnet, dass** sich der axiale Fortsatz (51) bei geschlossener und geöffneter Sperre über die gesamte axiale Dicke (4) der Öffnung (64) erstreckt.

5. Sperrvorrichtung (30) nach einem der vorhergehenden Ansprüche, **dadurch gekennzeichnet, dass** der Innenpol (47) aus einem magnetisch leitfähigen Material - beispielsweise Weicheisen - zur Bildung eines magnetischen Rückschlusses des Elektromagneten (44) gefertigt ist und der axiale Fortsatz (51) aus einem magnetisch näherungsweise nicht/oder schlecht leitendem Material - beispielsweise Edelstahl - gefertigt ist, um einen magnetischen Kurzschluss zwischen dem Fortsatz (51) und dem zweiten Sperrelement (34) zu verhindem.

6. Sperrvorrichtung (30) nach einem der vorhergehenden Ansprüche, **dadurch gekennzeichnet, dass** der axiale Fortsatz (51) als separates Bauteil gefertigt ist, das in eine Aufnahme des Innenpols (47) eingepresst ist.

7. Sperrvorrichtung (30) nach einem der vorhergehenden Ansprüche, **dadurch gekennzeichnet, dass** der axiale Fortsatz (51) ein Außenprofil aufweist, das in ein entsprechendes Innenprofil (48) des Innenpols (47) und /oder in entsprechende radiale Aussparungen (33) an der Öffnung (64) eingreift.

8. Sperrvorrichtung (30) nach einem der vorhergehenden Ansprüche, **dadurch gekennzeichnet, dass** der axiale Fortsatz (51) zumindest an der äußeren Oberfläche (57) eine Beschichtung (59) aufweist, die insbesondere als Gleitlack oder Nickelschicht ausgebildet ist.

9. Sperrvorrichtung (30) nach einem der vorhergehenden Ansprüche, **dadurch gekennzeichnet dass** am Innenpol (47) eine Lageraufnahme (3) ausgeformt ist, in die ein Drehlager (20) - insbesondere ein Kalottenlager (20) der Antriebswelle (14) montierbar ist.

10. Sperrvorrichtung (30) nach einem der vorhergehenden Ansprüche, **dadurch gekennzeichnet, dass** die Sperrvorrichtung (10) als eigenständige, vormontierbare Baueinheit (31) ausgebildet ist, [ ... ] und insbesondere das zweite Sperrelement (34) als ein Ankerblech (41) ausgebildet ist, das einen magnetischen Rückschluss für den Elektromagneten (44) bildet.

11. Sperrvorrichtung (30) nach einem der vorhergehenden Ansprüche, **dadurch gekennzeichnet, dass die beiden Sperrelemente (32, 34) radial verlaufende Rillen (82) und Erhöhungen (84) aufweisen, die den axialen Formschluss (85) bilden**

12. Sperrvorrichtung (30) nach einem der vorhergehenden Ansprüche, **dadurch gekennzeichnet, dass die formschlüssig ineinander greifenden Flächen der Sperrelemente (32, 34) unter einem Winkel von kleiner, bzw. größer als 90° gegenüber der Welle (14) angeordnet.**

13. Sperrvorrichtung (30) nach einem der vorhergehenden Ansprüche, **dadurch gekennzeichnet, dass** die axialen Führungsstifte (79) mittels Kunststoff- Spritzguss-Verfahren an einem Spulenträger (46) des Elektromagneten (44) angeformt sind, wobei insbesondere drei Führungsstifte (79) gleichmäßig verteilt über den Umfang des Elektromagneten (44) angeordnet sind.

14. Sperrvorrichtung (30) nach einem der vorhergehenden Ansprüche, **dadurch gekennzeichnet, dass** zwischen dem zweiten Sperrelement (34) und dem Elektromagneten (44) ein Dämpfungselement (28) angeordnet ist, an dem ein als konische Spiralfeder (43) ausgebildetes Rückstellelement (42) anliegt, wobei das Dämpfungselement (28) insbesondere als hutförmige Kappe (98) ausgebildet ist.

15. Getriebe-Antriebseinheit (10) mit einer Sperrvorrichtung (10) **nach Anspruch 9, dadurch gekennzeichnet, dass** die Sperrvorrichtung (30) mittels des Drehlagers (20) auf der Antriebswelle (14) angeordnet ist, die als Ankerwelle (14) eines Elektromotors (12) ausgebildet ist, und auf der Antriebswelle (14) eine Schnecke (24) angeordnet ist, die mit einem Schneckenrad (22) kämmt.

16. Verfahren zum Herstellen einer Getriebe-Antriebseinheit (10) **nach Anspruch 15, dadurch gekennzeichnet, dass** die Sperrvorrichtung (30) zuerst im Gehäuse (16) der Getriebe-Antriebseinheit (10) befestigt wird, und anschließend die Welle (14) - insbesondere mit **einem** Mitnehmer (66) - mit einem Formschluss (68, 70) in eine zentrale Aussparung (63) des ersten Sperrelements (32) eingeführt wird, wobei die Sperrvorrichtung (30) vor dem Einbau in das Gehäuse (16) und vor der Montage der Welle (14) als separate, von einem Sperrengehäuse (52) umschlossene Baueinheit (31) einfach auf Ihre Funktion überprüft werden kann.

## Claims

1. Locking device (30) for locking a rotational movement of a shaft (14) with respect to a housing (16) of a transmission/drive unit (10), having a first locking element (32) and a second locking element (34) which can be displaced axially with respect to the first locking element (32) by means of an electromagnet (44) and at least one restoring element (42), in order to produce a rotationally fixed connection between the first and the second locking element (32, 34), the locking elements (32, 34) engaging into one another in the axial direction (15) by means of an axial positively locking connection (85) in the locking state, and the electromagnet (44) having an internal pole (47) which is enclosed by an electric coil (45), and the second locking element (34) having axial holes (81), into which axial guide pins (79) engage for the axial guidance of the second locking element (34), which guide pins (79) are formed integrally on the axial side (87) of the electromagnet (44), **characterized in that** the internal pole (47) has a further axial projection (51) which, for axial guidance and centring, engages into a corresponding opening (64) of the second locking element (34), and the guide pins (79) are of conical configuration, the cone angle (77) being defined in such a way that there is sufficient play for toothing engagement of the axial positively locking connection (85) of the two locking elements (32, 34) during the closing operation of the locking device.

2. Locking device (30) according to Claim 1, **characterized in that** the second locking element (34) is configured as a disc which has a central aperture (64) with a thickness (4) as opening (64).

3. Locking device (30) according to either of Claims 1 and 2, **characterized in that** the axial projection (51) is configured as a sleeve (55) which encloses a drive shaft (14) which can be inserted, the second locking element (34) being supported radially on the sleeve (55).

4. Locking device (30) according to one of the preceding claims, **characterized in that** the axial projection (51) extends over the entire axial thickness (4) of the opening (64) when the lock is closed and open.

5. Locking device (30) according to one of the preceding claims, **characterized in that** the internal pole (47) is produced from a magnetically conductive material, for example soft iron, in order to form a back iron of the electromagnet (44), and the axial projection (51) is produced from a material which is magnetically approximately non-conducting or poorly conducting, for example stainless steel, in order to prevent a magnetic short circuit between the projection (51) and the second locking element (34).

6. Locking device (30) according to one of the preceding claims, **characterized in that** the axial projection (51) is produced as a separate component which is pressed into a receptacle of the internal pole (47).

7. Locking device (30) according to one of the preceding claims, **characterized in that** the axial projection (51) has an outer profile which engages into a corresponding inner profile (48) of the internal pole (47) and/or into corresponding radial cut-outs (33) at the opening (64).

8. Locking device (30) according to one of the preceding claims, **characterized in that** the axial projection (51) has a coating (59) at least on the outer surface (57), which coating (59) is configured, in particular, as a lubricant varnish or nickel layer.

9. Locking device (30) according to one of the preceding claims, **characterized in that** a bearing seat (3) is shaped out on the internal pole (47), into which bearing seat (3) a pivot bearing (20), in particular a spherical bearing (20) of the drive shaft (14) can be mounted.

10. Locking device (30) according to one of the preceding claims, **characterized in that** the locking device (10) is configured as an independent structural unit (31) which can be preassembled, and, in particular, the second locking element (34) is configured as an armature plate (41) which forms a back iron for the electromagnet (44).

11. Locking device (30) according to one of the preceding claims, **characterized in that** the two locking elements (32, 34) have radially running grooves (82) and elevations (84) which form the axial positively locking connection (85).

12. Locking device (30) according to one of the preceding claims, **characterized in that** those faces of the locking elements (32, 34) which engage into one another in a positively locking manner are arranged at an angle of less than or greater than 90° with respect to the shaft (14).

13. Locking device (30) according to one of the preceding claims, **characterized in that** the axial guide pins (79) are formed integrally on a coil former (46) of the electromagnet (44) by means of plastic injection-moulding processes, three guide pins (79), in particular, being arranged such that they are distributed uniformly over the circumference of the electromagnet (44).

14. Locking device (30) according to one of the preceding claims, **characterized in that** a damping element (28) is arranged between the second locking element (34) and the electromagnet (44), against which damping element (28) a restoring element (42) which is configured as a conical helical spring (43) bears, the damping element (28) being configured, in particular, as a hat-shaped cap (98).

15. Transmission/drive unit (10) having a locking device (10) according to Claim 9, **characterized in that** the locking device (30) is arranged by means of the pivot bearing (20) on the drive shaft (14) which is configured as armature shaft (14) of an electric motor (12), and a worm (24) which meshes with a worm gear (22) is arranged on the drive shaft (14).

16. Method for producing a transmission/drive unit (10) according to Claim 15, **characterized in that** the locking device (30) is fastened first of all in the housing (16) of the transmission/drive unit (10), and subsequently the shaft (14) is introduced into a central cut-out (63) of the first locking element (32) with a positively locking connection (68, 70), in particular by way of a driver (66), it being possible for the locking device (30) to have its function tested simply before installation into the housing (16) and before the mounting of the shaft (14) as a separate structural unit (31) which is enclosed by a lock housing (52).

## Revendications

1. Dispositif de blocage (30) pour le blocage d'un mouvement de rotation d'un arbre (14) par rapport à un boîtier (16) d'une unité d'entraînement à engrenage (10), comprenant un premier élément de blocage (32) et un deuxième élément de blocage (34) qui peut être déplacé axialement par rapport au premier élément de blocage (32) au moyen d'un électroaimant (44) et d'au moins un élément de rappel (42), afin de produire une liaison solidaire en rotation entre le premier et le deuxième élément de blocage (32,34), les éléments de blocage (32, 34) venant en prise l'un dans l'autre dans l'état de blocage dans la direction axiale (15) au moyen d'un engagement axial par correspondance géométrique (85), et l'électroaimant (44) présentant un pôle intérieur (47) qui est entouré par une bobine électrique (45), et le deuxième élément de blocage (34) présentant des trous axiaux (81) dans lesquels s'engagent des goupilles de guidage axiales (79) pour le guidage axial du deuxième élément de blocage (34), lesquelles goupilles de guidage sont façonnées sur le côté axial (87) de l'électroaimant (44),
**caractérisé en ce que** le pôle intérieur (47) présente une saillie axiale supplémentaire (51) qui vient en prise dans une ouverture correspondante (64) du deuxième élément de blocage (34) en vue du guidage axial et du centrage, et les goupilles de guidage (79) sont réalisées sous forme conique, l'angle de conicité (77) étant déterminé de telle sorte que suffisamment de jeu soit prévu pour permettre l'engagement des dentures de l'engagement axial par correspondance géométrique (85) des deux éléments de blocage (32, 34) lors de l'opération de fermeture du dispositif de blocage.

2. Dispositif de blocage (30) selon la revendication 1, **caractérisé en ce que** le deuxième élément de blocage (34) est réalisé sous forme de disque qui présente en tant qu'ouverture (64) un orifice central (64) ayant une épaisseur (4).

3. Dispositif de blocage (30) selon l'une quelconque des revendications 1 ou 2, **caractérisé en ce que** la saillie axiale (51) est réalisée sous forme de douille (55) qui entoure un arbre d'entraînement (14) pouvant être inséré, le deuxième élément de blocage (34) s'appuyant radialement contre la douille (55).

4. Dispositif de blocage (30) selon l'une quelconque des revendications précédentes, **caractérisé en ce que** la saillie axiale (51) s'étend sur toute l'épaisseur axiale (4) de l'ouverture (64) lorsque le système de blocage est fermé et ouvert.

5. Dispositif de blocage (30) selon l'une quelconque des revendications précédentes, **caractérisé en ce que** le pôle intérieur (47) est fabriqué en un matériau magnétiquement conducteur, par exemple en acier doux, pour la formation d'un reflux magnétique de l'électroaimant (44) et la saillie axiale (51) est fabriquée en un matériau mauvais conducteur magnétique ou pratiquement pas conducteur magnétique, par exemple en acier spécial, afin d'empêcher un court-circuit magnétique entre la saillie (51) et le deuxième élément de blocage (34).

6. Dispositif de blocage (30) selon l'une quelconque des revendications précédentes, **caractérisé en ce que** la saillie axiale (51) est réalisée sous forme de composant séparé, qui est pressé dans un logement du pôle intérieur (47).

7. Dispositif de blocage (30) selon l'une quelconque des revendications précédentes, **caractérisé en ce que** la saillie axiale (51) présente un profil extérieur qui vient en prise dans un profil intérieur (58) correspondant du pôle intérieur (47) et/ou dans des évidements radiaux correspondants (33) au niveau de l'ouverture (64).

8. Dispositif de blocage (30) selon l'une quelconque des revendications précédentes,
**caractérisé en ce que** la saillie axiale (51) présente au moins au niveau de la surface extérieure (57) un revêtement (59) qui est réalisé notamment sous forme de vernis de glissement ou de couche de nickel.

9. Dispositif de blocage (30) selon l'une quelconque des revendications précédentes, **caractérisé en ce qu**'un logement de palier (3) est formé au niveau du pôle intérieur (47), dans lequel logement de palier peut être monté un palier pivotant (20), notamment un palier sphérique (20) de l'arbre d'entraînement (14).

10. Dispositif de blocage (30) selon l'une quelconque des revendications précédentes, **caractérisé en ce que** le dispositif de blocage (30) est réalisé sous forme d'unité constructive (31) autonome prémontable, [...] et en particulier le deuxième élément de blocage (34) est réalisé sous forme de tôle d'induit (41) qui forme un reflux magnétique pour l'électroaimant (44).

11. Dispositif de blocage (30) selon l'une quelconque des revendications précédentes, **caractérisé en ce que** les deux éléments de blocage (32, 34) présentent des rainures (82) et des rehaussements (84) s'étendant radialement, qui forment l'engagement axial par correspondance géométrique (85).

12. Dispositif de blocage (30) selon l'une quelconque des revendications précédentes, **caractérisé en ce que** les surfaces des éléments de blocage (32, 34) qui s'engagent les unes dans les autres par engagement par correspondance géométrique sont disposées suivant un angle inférieur, respectivement supérieur, à 90° par rapport à l'arbre (14).

13. Dispositif de blocage (30) selon l'une quelconque des revendications précédentes, **caractérisé en ce que** les goupilles de guidage axiales (79) sont façonnées au moyen d'un procédé de moulage par injection de plastique sur un support de bobine (46) de l'électroaimant (44), trois goupilles de guidage (79) étant notamment réparties uniformément sur la périphérie de l'électroaimant (44).

14. Dispositif de blocage (30) selon l'une quelconque des revendications précédentes, **caractérisé en ce qu**'entre le deuxième élément de blocage (34) et l'électroaimant (44) est disposé un élément d'amortissement (28) sur lequel s'applique un élément de rappel (42) réalisé sous forme de ressort spiral conique (43), l'élément d'amortissement (28) étant réalisé notamment sous forme de capuchon en forme de chapeau (98).

15. Unité d'entraînement à engrenage (10) comprenant un dispositif de blocage (30) selon la revendication 9, **caractérisée en ce que** le dispositif de blocage (30) est disposé au moyen du palier pivotant (20) sur l'arbre d'entraînement (14), qui est réalisé sous forme d'arbre d'induit (14) d'un moteur électrique (12), et une vis sans fin (24) est disposée sur l'arbre d'entraînement (12), laquelle s'engrène avec une roue à denture hélicoïdale (22).

16. Procédé pour fabriquer une unité d'entraînement à engrenage (10) selon la revendication 15, **caractérisé en ce que** le dispositif de blocage (30) est d'abord fixé dans le boîtier (16) de l'unité d'entraînement à engrenage (10), puis l'arbre (14) est introduit dans un évidement central (63) du premier élément de blocage (32) par engagement par correspondance géométrique (68, 70), notamment avec un dispositif d'entraînement (66), le dispositif de blocage (30) pouvant être contrôlé simplement pour vérifier son fonctionnement avant l'installation dans le boîtier (16) et avant le montage de l'arbre (14), en tant qu'unité constructive (31) séparée entourée par un boîtier du système de blocage (52).
